# EUROPÄISCHE PATENTSCHRIFT

(11) **EP 2 985 234 B1**
(45) Veröffentlichungstag und Bekanntmachung des Hinweises auf die Patenterteilung: **16.11.2016**
(21) Anmeldenummer: 14180776.8
(22) Anmeldetag: 13.08.2014
(51) Int. Cl.: B65B 47/10, B65B 9/04, B29L 31/00, B29C 51/18, B29C 51/26

(54) **Tiefziehverpackungsmaschine mit bewegbarem Formeinsatz**
Deep draw packaging machine with movable mould insert
Machine d'emballage par emboutissage doté d'un insert de moulage mobile

(43) Veröffentlichungstag der Anmeldung: 17.02.2016
(73) Patentinhaber: MULTIVAC Sepp Haggenmüller SE & Co. KG, 87787 Wolfertschwenden (DE)
(72) Erfinder: Baur, Hubert, 87493 Lauben (DE); Ferk, Florian, 87730 Bad Grönenbach (DE)
(74) Vertreter: Grünecker Patent- und Rechtsanwälte PartG mbB

(56) Entgegenhaltungen:
- EP-A1- 0 186 729
- EP-A1- 0 962 386
- EP-A1- 2 570 351
- US-A- 5 014 500

## Beschreibung

Die Erfindung bezieht sich auf eine Tiefziehverpackungsmaschine mit den Merkmalen des Anspruchs 1 und auf ein Verfahren nach Anspruch 8.

Es ist aus der EP 2570351 A1 eine Formstation einer Tiefziehverpackungsmaschine bekannt, um Verpackungen mit einem Hinterschnitt formen zu können. Verpackungen mit einem sehr geringen Hinterschnitt werden dort auf Tiefziehverpackungsmaschinen in der Art geformt, dass eine beidseitig vorgesehene Klammerkette zum Folientransport die geformte Folie beim Öffnen des Formwerkzeugunterteils hält. Die beim Öffnen des Formwerkzeugunterteils auftretenden Zugkräfte auf die geformte Folie können von den Klammerketten nur begrenzt aufgenommen werden, da sonst die Folie aus den Klammerketten herausgezogen wird.

Aufgabe der vorliegenden Erfindung ist es, eine verbesserte Formstation für eine Tiefziehverpackungsanlage und ein Verfahren zum Betrieb einer solchen Formstation zur Verfügung zu stellen, um Hinterschnitte in eine Folie zu formen.

Diese Aufgabe wird gelöst durch eine Tiefziehverpackungsmaschine mit den Merkmalen des Anspruchs 1 bzw. durch ein Verfahren zum Betrieb einer solchen Tiefziehverpackungsmaschine mit den Merkmalen des Anspruchs 8. Vorteilhafte Weiterbildungen der Erfindung sind in den Unteransprüchen angegeben.

Die erfindungsgemäße Tiefziehverpackungsmaschine umfasst ein Formwerkzeugunterteil und wenigstens einen in dessen Inneren vorgesehenen Formeinsatz und zeichnet sich dadurch aus, dass der Formeinsatz einen Formboden und eine umlaufende Seitenwand aufweist, wobei der Formeinsatz relativ zum den Formeinsatz umgebenden Formwerkzeugunterteil bewegbar ist. Der Formeinsatz weist dabei wenigstens an einer Seitenwand einen Hinterschnitt zum Tiefziehen eines entsprechenden oder kongruenten Hinterschnitts in eine im Formeinsatz zu formende Mulde auf. Auf diese Weise kann beispielsweise eine Standpackung mit einer Form hergestellt werden, wie sie aus der EP 2 570 351 A1 bekannt ist.

Es können nun ein oder mehrere Formeinsätze von der zu einer Mulde geformten Folie nach dem Abkühlen der Folie selbst nach unten in das Formwerkzeugunterteil entfernt werden, ohne dass die durch Hinterschnitte der Mulden in den Formeinsätzen entstehenden Zugkräfte auf die Folie von seitlichen Klammerketten gehalten werden müssen, da die Folie immer noch zwischen dem Formwerkzeugoberteil und Formwerkzeugunterteil geklemmt sein kann.

Vorzugsweise ist der Formeinsatz einteilig.

Das Formwerkzeugunterteil weist bevorzugt einen Hubantrieb für den Formeinsatz auf, um den Formeinsatz relativ zum Formwerkzeugunterteil und damit auch innerhalb des Formwerkzeugunterteils zwischen einer Formposition und einer Entnahmeposition bewegen zu können.

Vorzugsweise ist ein gemeinsamer Hubantrieb für alle Formeinsätze vorgesehen, um die Bewegung der Formeinsätze zu synchronisieren und die Konstruktion kostengünstig zu gestalten.

In einer vorteilhaften Ausführung weist der Hubantrieb einen Pneumatikzylinder oder einen Servomotor auf, um beispielsweise schnelle und/oder exakte Positionierungen oder Bewegungen des Formeinsatzes zu ermöglichen.

Vorzugsweise weist der Formeinsatz im Inneren eine Höhe auf und ist um wenigstens diese Höhe relativ zum Formwerkzeugunterteil bewegbar.

Dabei weist der Hinterschnitt vorzugsweise eine Tiefe von wenigstens 2 mm auf, relativ zu den nicht-hinterschnittenen Bereichen der Seitenwand.

Ein erfindungsgemäßes Verfahren zum Formen einer Folie in einer Tiefziehverpackungsmaschine umfasst folgende Schritte:
- Schließen einer Formstation und Klemmen der Folie zwischen einem Formwerkzeugoberteil und einem Formwerkzeugunterteil;
- Tiefziehen der Folie in einen im Inneren des Formwekzeugunterteils aufgenommenen Formeinsatz zum Bilden einer Verpackungsmulde unter gleichzeitigem oder anschließendem Anlegen der Folie an wenigstens einen Hinterschnitt im Formeinsatz, während sich der Formeinsatz in einer Formposition befindet;
- anschließend an das Tiefziehen der Folie: Bewegen des Formeinsatzes relativ zum Formwerkzeugunterteil und zur geformten Folie in eine Entnahmeposition, während die Folie weiterhin zwischen dem Formwerkzeugoberteil und dem Formwerkzeugunterteil geklemmt bleibt;
- anschließend Öffnen der Formstation, um die tiefgezogene Mulde entnehmen oder weitertransportieren zu können.

Das Verfahren zeichnet sich dadurch aus, dass der Formeinsatz relativ zum Formwerkzeugunterteil und zur geformten Folie in eine Entnahmeposition bewegt wird, während die Folie zwischen dem Formwerkzeugoberteil und dem Formwerkzeugunterteil geklemmt ist.

Bevorzugt weist der Formeinsatz in seinem Inneren eine lichte Höhe auf und wird um wenigstens diese Höhe relativ zum Werkzeugunterteil bewegt, um den Formeinsatz als Ganzes aus dem Bewegungsbereich der in die Folie geformten Mulde zu bringen und um die Mulde mittels beidseitig vorgesehener Klammerketten nach dem Öffnen der Formstation für einen nächsten Arbeitstakt weitertransportieren zu können.

In einer besonders vorteilhaften Ausführung werden mehrere Formeinsätze mittels eines gemeinsamen Hubantriebs relativ zum Formwerkzeug zwischen einer Formposition und der Entnahmeposition bewegt.

Die Folie wird vorzugsweise zwischen wenigstens einem Formplattensteg des Formwerkzeugunterteils und dem Formwerkzeugoberteil geklemmt, um bei mehreren Formeinsätzen bzw. zu formenden Mulden eine Klemmung der Folie um jede Mulde herum aufzuweisen.

Vorzugsweise wird eine Bewegung des Formeinsatzes in die Formposition bei geschlossener Formstation verhindert, wenn sich zwischen dem Formwerkzeugoberteil und dem Formwerkzeugunterteil eine bereits in die Folie geformte Mulde befindet, um eine Kollision oder ein Zusammenstauchen von geformten Mulden zu verhindern. Dies kann über eine Steuerung der Tiefziehverpackungsmaschine erfolgen, da in der Steuerung die Information vorliegen kann, dass sich bereits geformte Mulden in der geöffneten Formstation bzw. zwischen dem Formwerkzeugunterteil und dem Formwerkzeugoberteil befinden.

Im Folgenden wird ein vorteilhaftes Ausführungsbeispiel der Erfindung anhand einer Zeichnung näher erläutert. Im Einzelnen zeigen:
- Fig. 1: eine schematische Seitenansicht einer erfindungsgemäßen Tiefziehverpackungsmaschine,
- Fig. 2: eine Schnittansicht in Produktionsrichtung der Formstation in offener Stellung,
- Fig. 3: die Formstation in geschlossener Stellung,
- Fig. 4: die Formstation mit abgesenkten Formeinsätzen,
- Fig. 5: die Formstation in offener Stellung und
- Fig. 6: eine alternative Formstation in offener Stellung.

Gleiche Komponenten sind in den Figuren durchgängig mit gleichen Bezugszeichen versehen.

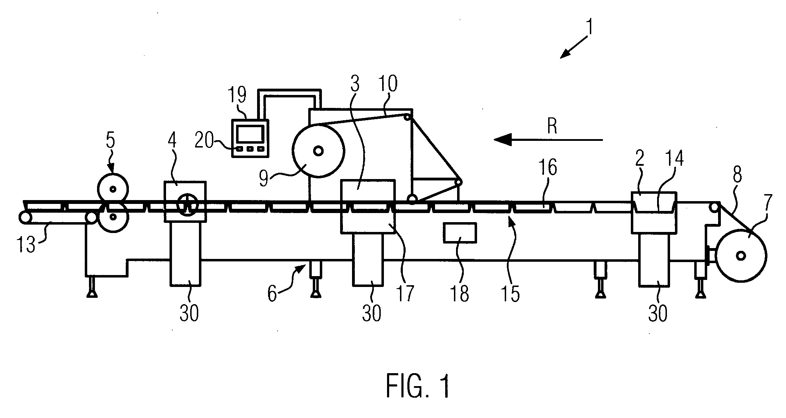

Fig. 1 zeigt in schematischer Ansicht eine erfindungsgemäße Tiefziehverpackungsmaschine 1. Die Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Produktionsrichtung R an einem Maschinengestell 6 angeordnet sind. Eingangsseitig befindet sich an dem Maschinengestell 6 eine Zufuhrrolle 7, von der eine Folie 8 abgezogen wird. Im Bereich der Siegelstation 3 ist ein Materialspeicher 9 vorgesehen, von dem eine Deckelfolie 10 abgezogen wird. Ausgangsseitig ist an der Tiefziehverpackungsmaschine eine Abfuhreinrichtung 13 in Form eines Transportbandes vorgesehen, mit der fertige, vereinzelte Verpackungen abtransportiert werden. Ferner weist die Tiefziehverpackungsmaschine 1 eine nicht dargestellte Vorschubeinrichtung auf, die die Folie 8 ergreift und diese pro Hauptarbeitstakt in der Produktionsrichtung R weitertransportiert. Die Vorschubeinrichtung kann zum Beispiel durch beidseitig angeordnete Transportketten 23 ausgeführt sein.

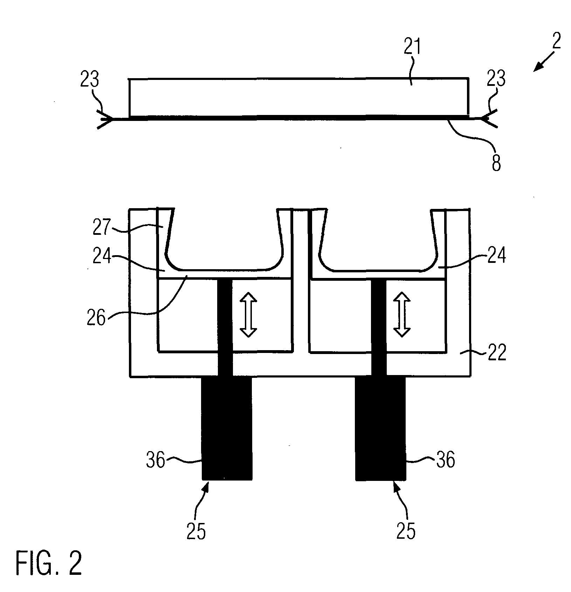

In der dargestellten Ausführungsform ist die Formstation 2 als eine Tiefziehstation ausgebildet, bei der in die Folie 8 durch Tiefziehen Mulden 14 geformt werden. Dabei kann die Formstation 2 derart ausgebildet sein, dass in der Richtung senkrecht zur Produktionsrichtung R mehrere Mulden nebeneinander gebildet werden. Die Formstation 2 weist ein Hubwerk 30 auf, um ein Formwerkzeugunterteil bzw. ein Werkzeug 22 (siehe Fig. 2) nach oben gegen ein Formwerkzeugoberteil 21 in eine Arbeitsposition für den Formprozess zu bewegen. In Produktionsrichtung R hinter der Formstation 2 ist eine Einlegestrecke 15 vorgesehen, in der die in der Folie 8 geformten Mulden 14 mit Produkten 16 befüllt werden.

Die Siegelstation 3 verfügt ebenfalls über ein Hubwerk 30 und über eine verschließbare Kammer 17, in der die Atmosphäre in den Mulden 14 vor dem Versiegeln zum Beispiel durch Evakuieren oder Gasspülen mit einem Austauschgas oder mit einem Gasgemisch ersetzt werden kann.

Die Querschneideeinrichtung 4 umfasst auch ein Hubwerk 30 und ist als Stanze ausgebildet, die die Folie 8 und die Deckelfolie 10 in einer Richtung quer zur Produktionsrichtung R zwischen benachbarten Mulden 14 durchtrennt. Dabei arbeitet die Querschneideeinrichtung 4 derart, dass die Folie 8 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung ausgebildet, mit der die Folie 8 und die Deckelfolie 10 zwischen benachbarten Mulden 14 und am seitlichen Rand der Folie 8 durchtrennt werden, so dass hinter der Längsschneideeinrichtung 5 vereinzelte Verpackungen vorliegen.

Die Tiefziehverpackungsmaschine 1 verfügt ferner über eine Steuerung 18. Sie hat die Aufgabe, die in der Tiefziehverpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

Die generelle Arbeitsweise der Verpackungsmaschine 1 wird im Folgenden kurz beschrieben.

Die Folie 8 wird von der Zufuhrrolle 7 abgezogen und durch die Vorschubeinrichtung in die Formstation 2 transportiert. In der Formstation 2 werden durch Tiefziehen Mulden 14 in der Folie 8 gebildet. Die Mulden 14 werden zusammen mit dem umgebenden Bereich der Folie 8 in einem Hauptarbeitstakt zu der Einlegestrecke 15 weitertransportiert, in der sie mit Produkten 16 befüllt werden.

Anschließend werden die befüllten Mulden 14 zusammen mit dem sie umgebenden Bereich der Folie 8 in dem Hauptarbeitstakt durch die Vorschubeinrichtung in die Siegelstation 3 weitertransportiert. Die Deckelfolie 10 wird nach einem Ansiegelvorgang an die Folie 8 mit der Vorschubbewegung der Folie 8 weitertransportiert. Dabei wird die Deckelfolie 10 von dem Materialspeicher 9 abgezogen. Durch das Ansiegeln der Deckelfolie 10 auf die Mulden 14 entstehen verschlossene Verpackungen, die in den nachfolgenden Schneidungen 4 und 5 vereinzelt und mittels der Abfuhreinrichtung 13 aus der Tiefziehverpackungsmaschine 1 heraus transportiert werden.

Fig. 2 zeigt eine Schnittansicht in Produktionsrichtung R der Formstation 2 in offener Stellung. Die Formstation 2 umfasst ein Formwerkzeugoberteil 21 und ein Formwerkzeugunterteil 22. Die Folie 8 wird von einer Vorschubeinrichtung in Form von zwei seitlich vorgesehenen Klammerketten 23 gehalten und transportiert. Im Inneren des Formwerkzeugunterteils 22 sind getrennt von diesem zwei Formeinsätze 24 vorgesehen, die mittels Hubantrieben 25 relativ zum Formwerkzeugunterteil 22 bewegbar sind. Die Hubantriebe 25 können als Pneumatikzylinder 36 oder als motorische Antriebe, vorzugsweise Servomotoren 36, ausgeführt sein. Ein Formeinsatz 24 selbst umfasst einen Formboden 26 und eine umlaufende Seitenwand 27. Dabei kann der Formeinsatz 24 einteilig ausgeführt sein oder der Formboden 26 ist mit mehreren Seitenwänden 27 zu einer Einheit zusammengesetzt.

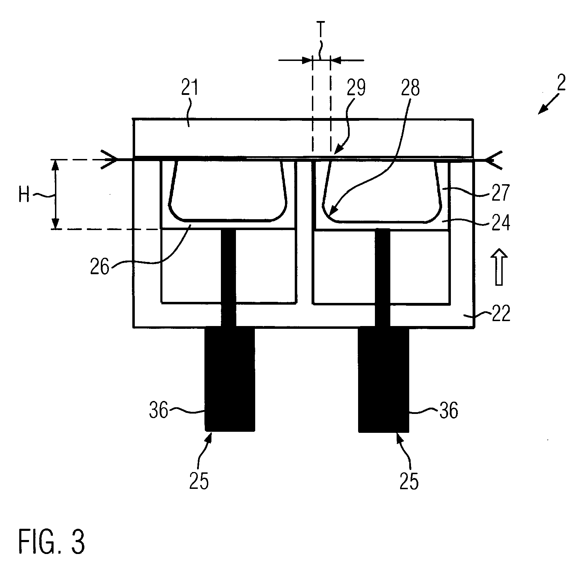

Fig. 3 zeigt die Formstation 2 in geschlossener Stellung, die durch das Anheben des Formwerkzeugunterteils 22 in Pfeilrichtung mittels des Hubwerks 30 an das Formwerkzeugoberteil 21 erreicht wird. Dabei wird die Folie 8 zwischen dem Formwerkzeugunterteil 22 und dem Formwerkzeugoberteil 21 geklemmt. In dieser Stellung wird die über das Formwerkzeugoberteil 21 erwärmte Folie 8 mittels Druckluft von oben und optional mit zusätzlichem Vakuum im Formwerkzeugunterteil 22 in die Formeinsätze 24 geformt, d.h. tiefgezogen, wobei jeder Formeinsatz 24 einen Hinterschnitt 28 in wenigstens einer Seitenwand 27 aufweist. Der Hinterschnitt 28 weist eine horizontal ausgerichtete Vertiefung T gegenüber einer inneren umlaufenden Oberkante 29 auf. Der Formeinsatz 24 weist im Inneren auch eine lichte Höhe H auf, deren Begrenzung durch die Oberseite des Formbodens 26 und die Oberkante 29 der Seitenwand 27 definiert ist.

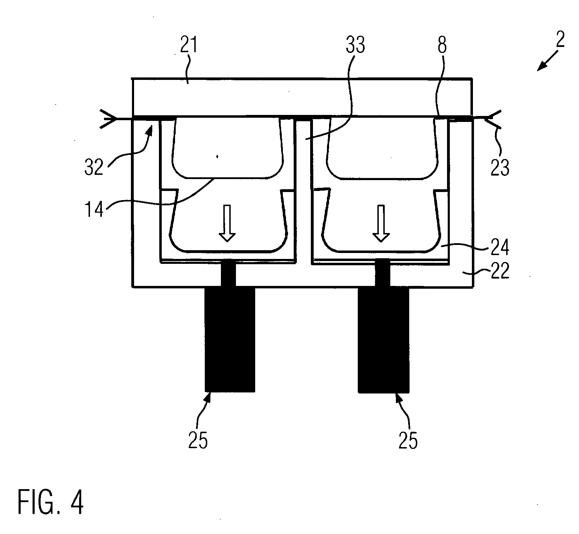

Nach dem Formvorgang werden die Formeinsätze 24, wie in Fig. 4 dargestellt, in Pfeilrichtung mittels der Hubantriebe 25 vom Formwerkzeugoberteil 21 weg und relativ zum Formwerkzeugunterteil 22 und zu den geformten Mulden 14 nach unten bewegt. Dabei treten durch die Hinterschnitte 28 erzeugte Zugkräfte auf die Folie 8 auf, die nicht durch die Klammerketten 23 aufgenommen werden müssen, sondern durch das Klemmen der Folie 8 an den Außenwänden 32 des Formwerkzeugunterteils 22 und dem Formwerkzeugoberteil 21 sowie zwischen einem Steg 33 des Formwerkzeugunterteils 22 und dem Formwerkzeugoberteil 21 aufgenommen werden.

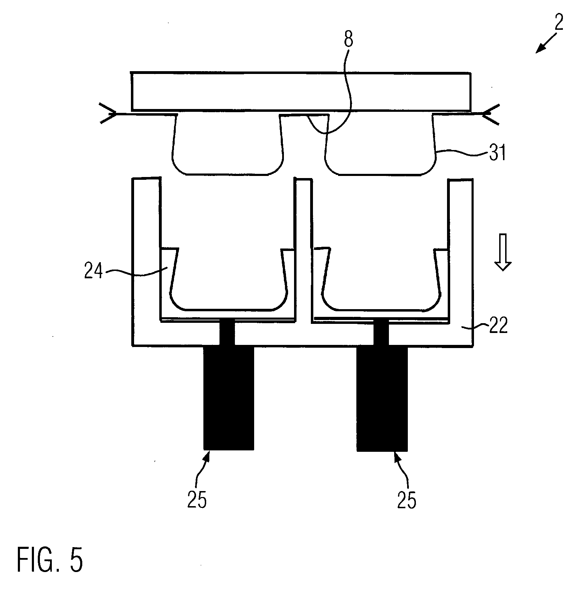

Nachdem die Mulden 14 aus den Formeinsätzen 24 entfernt wurden, wird, wie in Fig. 5 gezeigt, das Formwerkzeugunterteil 22 mit den in seinem Inneren enthaltenen Formeinsätzen 24 nach unten in Pfeilrichtung abgesenkt, um die Folie 8 für den Weitertransport für den nächsten Arbeitstakt freizugeben. Anschließend können die Formeinsätze 24 relativ zum Formwerkzeugunterteil 22 in die Formposition wie in Fig. 2 angehoben werden, oder diese Relativbewegung findet erst während oder nach der Schließbewegung des Formwerkzeugunterteils 22 an das Formwerkzeugoberteil 21 statt.

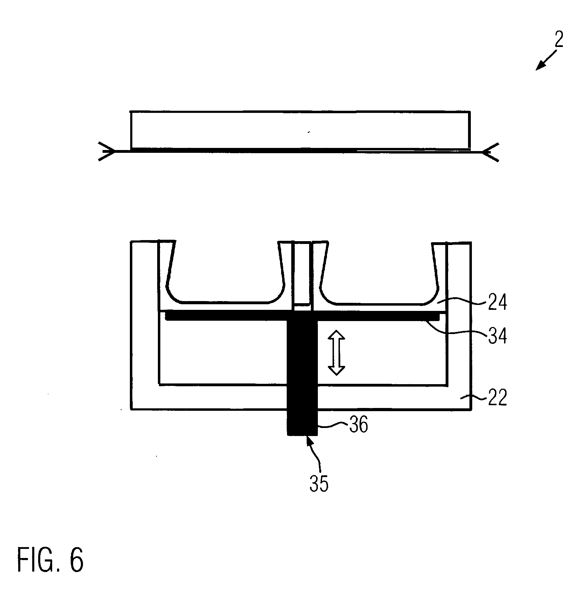

Fig. 6 zeigt eine alternative Ausführung des Formwerkzeugunterteils 22, bei dem die Formeinsätze 24 auf einer gemeinsamen Hubplatte 34 angeordnet sind und lediglich ein einziger Hubantrieb 35 für die Relativbewegung mehrerer oder aller Formeinsätze 24 gegenüber dem Formwerkzeugunterteil 22 vorgesehen ist.

## Patentansprüche

1. Tiefziehverpackungsmaschine (1), umfassend ein Formwerkzeugunterteil (22), in dessen Inneren wenigstens ein Formeinsatz (24) vorgesehen ist, **dadurch gekennzeichnet, dass** der Formeinsatz (24) einen Formboden (26) und Seitenwände (27) aufweist, wobei der Formeinsatz (24) wenigstens an einer Seitenwand (27) einen Hinterschnitt (28) zum Tiefziehen einer zu formenden Mulde (14) aufweist, und wobei der Formeinsatz (24) relativ zum Formwerkzeugunterteil (22) bewegbar ist.

2. Tiefziehverpackungsmaschine nach Anspruch 1, **dadurch gekennzeichnet, dass** der Formeinsatz (24) einteilig ist.

3. Tiefziehverpackungsmaschine nach einem der vorangehenden Ansprüche, **dadurch gekennzeichnet, dass** das Formwerkzeugunterteil (22) einen Hubantrieb (25, 35) für den Formeinsatz (24) aufweist.

4. Tiefziehverpackungsmaschine nach Anspruch 3, **dadurch gekennzeichnet, dass** ein gemeinsamer Hubantrieb (35) für alle Formeinsätze (24) vorgesehen ist.

5. Tiefziehverpackungsmaschine nach Anspruch 3 oder 4, **dadurch gekennzeichnet, dass** der Hubantrieb (25, 35) einen Pneumatikzylinder (36) oder einen Servomotor (36) aufweist.

6. Tiefziehverpackungsmaschine nach einem der vorangehenden Ansprüche, **dadurch gekennzeichnet, dass** der Formeinsatz (24) im Inneren eine lichte Höhe (H) aufweist und um wenigstens diese Höhe (H) relativ zum Formwerkzeugunterteil (22) bewegbar ist.

7. Tiefziehverpackungsmaschine nach einem der vorangehenden Ansprüche, **dadurch gekennzeichnet, dass** der Hinterschnitt (28) eine Tiefe (T) von wenigstens 2 mm aufweist.

8. Verfahren zum Formen einer Folie (8) in einer Tiefziehverpackungsmaschine (1), umfassend:
Schließen einer Formstation (2) und Klemmen der Folie (8) zwischen einem Formwerkzeugoberteil (21) und einem Formwerkzeugunterteil (22);
Tiefziehen der Folie (8) in einen im Inneren des Formwerkzeugunterteils (22) aufgenommenen Formeinsatz (24) zum Bilden einer Mulde (14) unter Anlegen der Folie (8) an wenigstens einen Hinterschnitt (28) im Formeinsatz (24), während sich der Formeinsatz (24) in einer Formposition befindet,
anschließend Bewegen des Formeinsatzes (24) relativ zum Formwerkzeugunterteil (22) und zur geformten Folie (8) in eine Entnahmeposition, während die Folie (8) zwischen dem Formwerkzeugoberteil (21) und dem Formwerkzeugunterteil (22) geklemmt bleibt,
anschließend Öffnen der Formstation (2).

9. Verfahren nach Anspruch 8, **dadurch gekennzeichnet, dass** der Formeinsatz (24) im Inneren eine lichte Höhe (H) aufweist und der Formeinsatz (24) um wenigstens diese Höhe (H) relativ zum Formwerkzeugunterteil (22) bewegt wird.

10. Verfahren nach Anspruch 8 oder 9, **dadurch gekennzeichnet, dass** mehrere Formeinsätze (24) mittels eines gemeinsamen Hubantriebs (35) relativ zum Formwerkzeugunterteil (22) zwischen der Formposition und der Entnahmeposition bewegt werden.

11. Verfahren nach einem der Ansprüche 8 bis 10, **dadurch gekennzeichnet, dass** die Folie (8) zwischen wenigstens einem Formplattensteg (33) des Formwerkzeugunterteils (22) und dem Formwerkzeugoberteil (21) geklemmt wird, während der Formeinsatz (24) relativ zum Formwerkzeugunterteil (22) bewegt wird.

12. Verfahren nach einem der Ansprüche 8 bis 11, **dadurch gekennzeichnet, dass** eine Bewegung des Formeinsatzes (24) in die Formposition bei geschlossener Formstation (2) verhindert wird, wenn sich zwischen dem Formwerkzeugoberteil (21) und dem Formwerkzeugunterteil (22) eine bereits in die Folie (8) geformte Mulde (14) befindet.

## Claims

1. A thermoform packaging machine (1), comprising a forming tool lower part (22) in the interior of which at least one mold insert (24) is provided, **characterized in that** the mold insert (24) comprises a mold bottom (26) and sidewalls (27), wherein said mold insert (24) has on at least one sidewall (27) thereof an undercut (28) for thermoforming a trough (14) to be formed, and wherein the mold insert (24) is movable relative to the forming tool lower part (22).

2. The thermoform packaging machine according to claim 1, **characterized in that** the mold insert (24) is formed in one piece.

3. The thermoform packaging machine according to one of the preceding claims, **characterized in that** the forming tool lower part (22) comprises a lift drive (25, 35) for the mold insert (24).

4. The thermoform packaging machine according to claim 3, **characterized in that** a common lift drive (35) is provided for all mold inserts (24).

5. The thermoform packaging machine according to claim 3 or 4, **characterized in that** the lift drive (25, 35) comprises a pneumatic cylinder (36) or a servomotor (36).

6. The thermoform packaging machine according to one of the preceding claims, **characterized in that** the mold insert (24) has a clear height (H) in the interior thereof, and is movable relative to the forming tool lower part (22) to an extent corresponding to at least this height (H).

7. The thermoform packaging machine according to one of the preceding claims, **characterized in that** the undercut (28) has a depth (T) of at least 2 mm.

8. A method of forming a film (8) in a thermoform packaging machine (1), comprising:
closing a forming station (2) and clamping the film (8) between a forming tool upper part (21) and a forming tool lower part (22);
thermoforming the film (8) into a mold insert (24) accommodated in the interior of the forming tool lower part (22), so as to form a trough (14) while bringing the film (8) into contact with at least one undercut (28) in the mold insert (24), with said mold insert (24) occupying a forming position,
subsequently, moving the mold insert (24) relative to the forming tool lower part (22) and relative to the formed film (8) to a removal position while said film (8) remains clamped between the forming tool upper part (21) and the forming tool lower part (22),
subsequently, opening the forming station (2).

9. The method according to claim 8, **characterized in that** the mold insert (24) has a clear height (H) in the interior thereof, and that the mold insert (24) is moved relative to the forming tool lower part (22) to an extent corresponding to at least this height (H).

10. The method according to claim 8 or 9, **characterized in that**, by means of a common lift drive (35), a plurality of mold inserts (24) is moved relative to the forming tool lower part (22) between the forming position and the removal position.

11. The method according to one of the claims 8 to 10, **characterized in that** the film (8) is clamped between at least one forming plate web (33) of the forming tool lower part (22) and the forming tool upper part (21) while the mold insert (24) is being moved relative to the forming tool lower part (22).

12. The method according to one of the claims 8 to 11, **characterized in that** a movement of the mold insert (24) to the forming position in the closed condition of the forming station (2) is prevented, if a trough (14) that has already been formed in the film (8) is located between the forming tool upper part (21) and the forming tool lower part (22).

## Revendications

1. Machine d'emballage par thermoformage (1), comprenant une partie inférieure d'outillage de formage (22) à l'intérieur de laquelle est prévu au moins un insert de moulage par formage (24), **caractérisée en ce que** l'insert de moulage par formage (24) présente un fond de formage (26) et des parois latérales (27), l'insert de moulage par formage (24) présentant sur au moins une paroi latérale (27), une contre-dépouille (28) pour le thermoformage d'une cavité (14) à mouler par formage, et l'insert de moulage par formage (24) étant mobile par rapport à la partie inférieure d'outillage de formage (22).

2. Machine d'emballage par thermoformage selon la revendication 1, **caractérisée en ce que** l'insert de moulage par formage (24) est en une seule partie.

3. Machine d'emballage par thermoformage selon l'une des revendications précédentes, **caractérisée en ce que** la partie inférieure d'outillage de formage (22) comporte un entraînement de levage (25, 35) pour l'insert de moulage par formage (24).

4. Machine d'emballage par thermoformage selon la revendication 3, **caractérisée en ce qu'**il est prévu un entraînement de levage (35) commun pour tous les inserts de moulage par formage (24).

5. Machine d'emballage par thermoformage selon la revendication 3 ou la revendication 4, **caractérisée en ce que** l'entraînement de levage (25, 35) comprend un vérin pneumatique (36) ou un servomoteur (36).

6. Machine d'emballage par thermoformage selon l'une des revendications précédentes, **caractérisée en ce que** l'insert de moulage par formage (24) présente à l'intérieur une hauteur libre (H), et peut être déplacé d'au moins cette hauteur (H), par rapport à la partie inférieure d'outillage de formage (22).

7. Machine d'emballage par thermoformage selon l'une des revendications précédentes, **caractérisée en ce que** la contre-dépouille (28) présente une profondeur (T) d'au moins 2 mm.

8. Procédé destiné à assurer le formage d'une feuille (8) dans une machine d'emballage par thermoformage (1), comprenant :
la fermeture d'un poste de formage (2) et le serrage de la feuille (8) entre une partie supérieure d'outillage de formage (21) et une partie inférieure d'outillage de formage (22) ;
le thermoformage de la feuille (8) dans un insert de moulage par formage (24) reçu à l'intérieur de la partie inférieure d'outillage de formage (22), pour former une cavité (14) par application de la feuille (8) contre au moins une contre-dépouille (28) dans l'insert de moulage par formage (24) pendant que l'insert de moulage par formage (24) se trouve dans une position de formage ;
puis déplacement de l'insert de moulage par formage (24) par rapport à la partie inférieure d'outillage de formage (22) et à la feuille (8) ayant été moulée par formage, vers une position de prélèvement, pendant que la feuille (8) reste serrée entre la partie supérieure d'outillage de formage (21) et la partie inférieure d'outillage de formage (22) ;
puis ouverture du poste de formage (2).

9. Procédé selon la revendication 8, **caractérisé en ce que** l'insert de moulage par formage (24) présente à l'intérieur une hauteur libre (H), et l'insert de moulage par formage (24) est déplacé d'au moins cette hauteur (H), par rapport à la partie inférieure d'outillage de formage (22).

10. Procédé selon la revendication 8 ou la revendication 9, **caractérisé en ce que** plusieurs inserts de moulage par formage (24) sont déplacés au moyen d'un entraînement de levage (35) commun, par rapport à la partie inférieure d'outillage de formage (22), entre la position de formage et la position de prélèvement.

11. Procédé selon l'une des revendications 8 à 10, **caractérisé en ce que** la feuille (8) est serrée entre au moins une nervure de plateau de formage (33) de la partie inférieure d'outillage de formage (22) et la partie supérieure d'outillage de formage (21), pendant que l'insert de moulage par formage (24) est déplacé par rapport à la partie inférieure d'outillage de formage (22).

12. Procédé selon l'une des revendications 8 à 11, **caractérisé en ce qu'**un mouvement de déplacement de l'insert de moulage par formage (24) dans la position de formage est empêché, dans le cas d'un poste de formage (2) fermé, lorsqu'entre la partie supérieure d'outillage de formage (21) et la partie inférieure d'outillage de formage (22) se trouve déjà une cavité (14) moulée par formage dans la feuille (8).
